Europäisches Patentamt

European Patent Office

Office européen des brevets

(11) Veröffentlichungsnummer: **0 276 259 B1**

## EUROPÄISCHE PATENTSCHRIFT

(45) Veröffentlichungstag der Patentschrift: **30.01.91**

(51) Int. Cl.⁵: **B 65 H 5/24, B 65 G 47/31**

(21) Anmeldenummer: **87904799.1**

(22) Anmeldetag: **04.08.87**

(86) Internationale Anmeldenummer:
**PCT/AT87/00043**

(87) Internationale Veröffentlichungsnummer:
**WO 88/00917 11.02.88 Gazette 88/04**

(54) **VORRICHTUNG ZUM VEREINZELN VON BLATTFÖRMIGEM MATERIAL.**

(30) Priorität: **05.08.86 AT 2113/86**

(43) Veröffentlichungstag der Anmeldung:
**03.08.88 Patentblatt 88/31**

(45) Bekanntmachung des Hinweises auf die
Patenterteilung:
**30.01.91 Patentblatt 91/05**

(84) Benannte Vertragsstaaten:
**AT BE CH DE FR GB IT LI LU NL SE**

(56) Entgegenhaltungen:
**DE-A-2 544 499**
**DE-A-3 214 350**
**DE-B-1 285 393**
**DE-B-2 815 829**
**GB-A-2 094 767**
**US-A-2 701 049**

(73) Patentinhaber: **Dr. Liebe-Herzing Graphische Maschinen KG**
**Margaretenstrasse 98**
**A-1050 Wien (AT)**

(72) Erfinder: **LIEBE-HERZING, Fritz**
**Margaretenstrasse 98**
**A-1050 Wien (AT)**

(74) Vertreter: **Holzer, Walter, Dipl.-Ing. et al**
**Patentanwälte, Dipl.-Ing. Dr.techn. Schütz**
**Alfred, Dipl.-Ing. Holzer Walter Dipl.-Ing. Pfeifer**
**Otto Fleischmanngasse 9**
**A-1040 Wien (AT)**

Courier Press, Leamington Spa, England.

**Beschreibung**

Die Erfindung betrifft eine Vorrichtung zum Vereinzeln von blattförmigem Material zwischen zwei hintereinander geschalteten Fördereinrichtungen, die insbesondere an Falzapparate oder Rotationsschneideanlagen für Druckprodukte angeschlossen sind, wobei das Material auf der zufuhrseitigen Fördereinrichtung in Schuppenformation angeordnet ist und wobei die Vorrichtung mehrere in Förderrichtung hintereinander angeordnete Fördereinheiten aufweist.

In der Druckereiindustrie ist es häufig erforderlich, auf einer Fördereinrichtung schuppenförmig übereinanderliegende Druckprodukte, die beispielsweise von einem Falzapparat kommen und einer Schneidvorrichtung zugeführt werden sollen, zu vereinzeln.

Eine bisher bekannte Vereinzelungsvorrichtung der einleitend angegebenen Art (DE—B2—28 15 829) beruht auf dem Prinzip des plötzlichen Herausziehens der einzelnen, den Schuppenstrom bildenden Druckprodukte. Dabei fallen in der Regel die Druckprodukte von dem den Schuppenstrom transportierenden Förderband auf ein tiefer gelegenes, mit größerer Geschwindigkeit angetriebenes Förderband. Das hat unterschiedliche Förderniveaus und vor allem die verschiedensten Produktabstände zur Folge, was sich wieder auf den platzbedarf der Vorrichtungen nachteilig auswirkt.

Die Erfindung zielt darauf ab, diesen Nachteil zu vermeiden und eine geordnete Vereinzelung der Druckprodukte auf kürzester Strecke in ein und derselben Transportebene zu ermöglichen. Die erfindungsgemäße Vorrichtung zeichnet sich dadurch aus, daß die Fördereinheiten je aus zwei zueinander parallelen, gleichdurchmeßrigen Vorschubwalzen gebildet sind, daß die Vorschubwalzen jeweils an einem Ende über einen Riementrieb miteinander in Antriebsverbindung stehen, wogegen sie an ihrem anderen Ende mit der jeweils benachbarten Vorschubwalze der in Förderrichtung vorgeschalteten und nachgeschalteten Fördereinheit ebenfalls über einen Riementrieb in Antriebsverbindung stehen, wobei die Durchmesser der Riemenscheiben jeweils so groß gewählt sind, daß in Förderrichtung gesehen zwischen je zwei Vorschubwalzen eine Geschwindigkeitserhöhung der stromabwärtigen Vorschubwalze erfolgt.

Auf diese Weise wird eine kontinuierliche bzw. stufenlose und geordnete Vereinzelung der Druckprodukte in ein und derselben Transportebene gewährleistet.

Gemäß einer bevorzugten Ausführungsform der Erfindung steht die der austragseitigen Fördereinrichtung zugekehrte Vorschubwalze der in Förderrichtung letzten Fördereinheit mit der austragsseitigen Fördereinrichung in Antriebsverbindung, die mit größerer Geschwindigkeit als die zufuhrseitige Fördereinrichtung angetrieben ist.

Die Erfindung wird nachfolgend an einem Ausführungsbeispiel unter Bezugnahme auf die Zeichnung näher erläutert, in der

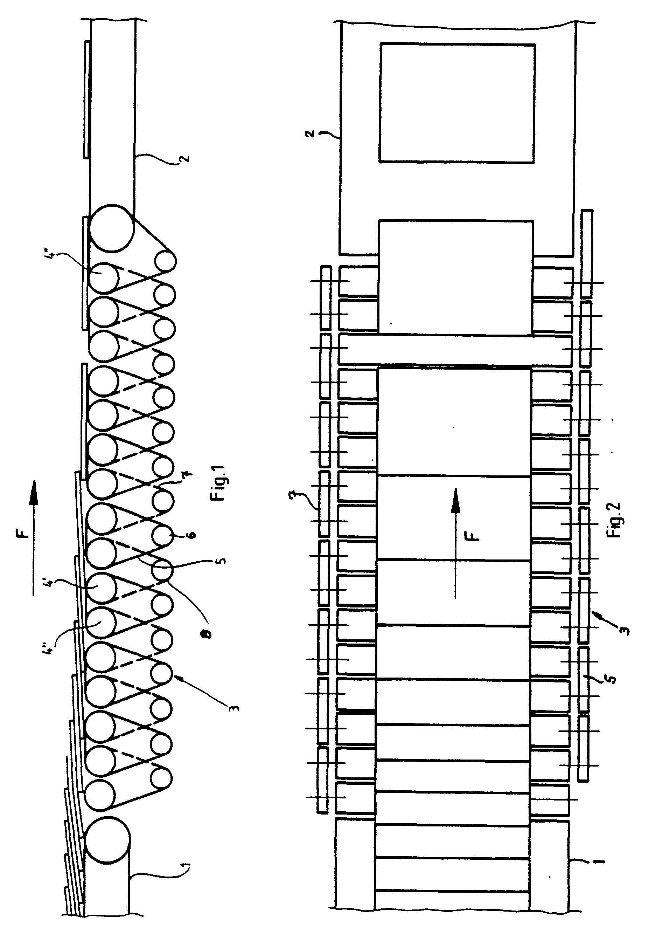

Fig. 1 eine schematische Seitenansicht und Fig. 2 eine Draufsicht auf die erfindungsgemäße Vorrichtung zeigt.

Die Vereinzelungsvorrichtung ist einem Förderband 1, 2 nachgeschaltet. Auf dem Förderband 1 werden Druckprodukte, die z.B. von einem Falzapparat kommen, in Schuppenformation in Förderrichtung F transportiert, z.B. mit einer Geschwindigkeit von 0,5 m/sec. Ein stromabwärtiges Förderband 2 transportiert die vereinzelten Druckprodukte z.B. mit einer Geschwindigkeit von etwa 3—4 m/sec ab, beispielsweise zu einer Falzvorrichtung.

Die Vereinzelungsvorrichtung weist beim dargestellten Beispiel mehrere hintereinander geschaltete Fördereinheiten 3 auf, die je aus zwei zueinander parallelen, gleichdurchmeßrigen Vorschubwalzen 4', 4'' gebildet sind. Diese Vorschubwalzen sind jeweils an ihrem einen Ende über einen Zahnriementrieb 5, der eine vom Riemen umschlungene Spannrolle 6 aufweist, auf gemeinsamen Antrieb gekuppelt. An ihrem anderen Ende stehen die Vorschubwalzen über einen weiteren Zahnriementrieb 7 mit der benachbarten Walze 4'' der in Förderrichtung F vorgeschalteten Fördereinheit 3 und der benachbarten Walze 4' der in Förderrichtung nachgeschalteten Fördereinheit 3 in Antriebsverbindung.

Jeder Zahnriementrieb 7 weist ebenfalls eine Spannrolle 8 auf. Die mit den Vorschubwalzen verbundenen Durchmesser der beiden Zahnriemenscheiben der Zahnriementriebe 5, 7 sind jeweils so groß gewählt, daß innerhalb der Getriebekette kontinuierlich eine Übersetzung von einer kleinen zu einer großen Drehzahl erfolgt. Dies hat zur Folge, daß eine kontinuierliche Beschleunigung der auf der Vorschubbahn liegenden Druckprodukte bzw. ein Auseinanderziehen und Vereinzeln der Druckprodukte erfolgt, so daß sie etwa die 8-fache Geschwindigkeit im Vergleich zur Geschwindigkeit, des Förderbandes 1 erreichen.

Der Antrieb kann in eine beliebige Fördereinheit, d.h. an eine beliebige Stelle der Vereinzelungsvorrichtung eingeleitet werden.

Beim dargestellten Beispiel erfolgt der Antrieb der Vereinzelungsvorrichtung von der in Förderrichtung letzten Fördereinrichung her, die schneller als die stromaufwärtige läuft. Zu diesem Zweck weist die in Förderrichtung letzte Fördereinheit lediglich eine Walze 4'' auf, die mit der Umlenkwalze 2' der austragseitigen Fördereinrichtung 2 in Antriebsverbindung steht.

**Patentansprüche**

1. Vorrichtung zum Vereinzeln von blattförmigem Material zwischen zwei hintereinander geschalteten Fördereinrichtungen, die insbesondere an einen Falzapparat für Druckprodukte angeschlossen sind, wobei das Material auf der zufuhrseitigen Fördereinrichtung in Schuppenformation angeordnet ist, mit mehreren in Förderrichtung hintereinander angeordneten Fördereinheiten, dadurch gekennzeichnet, daß die Fördereinheiten (3) je aus zwei zueinander parallelen, gleichdurchmeßrigen Vorschubwalzen (4', 4'') gebildet sind, daß die Vorschubwalzen (4', 4'') jeweils an einem Ende über einen Riementrieb (5) miteinander in Antriebsverbindung stehen, wogegen sie an ihrem anderen Ende mit der jeweils benachbarten Walze der in Förderrichtung (F) vorgeschalteten und nachgeschalteten Fördereinheit ebenfalls über einen Riementrieb (7) in Antriebsverbindung stehen, wobei die Durchmesser der Riemenscheiben der einzelnen Riementriebe jeweils so groß gewählt sind, daß in Förderrichtung gesehen zwischen je zwei Walzen eine Geschwindigkeitserhöhung der stromabwärtigen Vorschubwalze erfolgt.

2. Vorrichtung nach Anspruch 1, dadurch gekennzeichnet, daß die der austragseitigen Fördereinrichtung (2) zugekehrte Vorschubwalze (4'') der in Förderrichtung letzten Fördereinheit (3) mit der austragseitigen Fördereinrichtung (2) in Antriebsverbindung steht, die mit größerer Geschwindigkeit als die zufuhrseitige Fördereinrichtung (1) angetrieben ist.

3. Vorrichtung nach Anspruch 1 oder 2, dadurch gekennzeichnet, daß die Riementriebe als Zahnriementriebe (5, 7) ausgebildet sind.

4. Vorrichtung nach einem der Ansprüche 1 bis 3 dadurch gekennzeichnet, daß die Vorschubwalzen (4', 4'') mit einem reibungserhöhenden Überzug versehen sind.

## Revendications

1. Dispositif pour séparer des articles en forme de feuilles entre deux dispositifs transporteurs installés l'un à la suite de l'autre, qui sont reliés, en particulier, à une plieuse pourdes imprimés, les articles étant disposés en une nappe imbriquée sur le dispositif transporteur d'alimentation, comportant plusieurs unités transporteuses disposées les unes derrière les autres dans la direction de transport, caractérisé en ce que les unités transporteuses (3) sont chacune formées de deux rouleaux d'avancement (4', 4'') de même diamètre, parallèles l'un à l'autre, que les rouleaux d'avancement (4', 4'') sont chaque fois reliés l'un à l'autre en relation d'entraînement, à une extrémité, par une transmission à courroie (5), tandis qu'à leur autre extrémité, ils sont reliés en relation d'entraînement respectivement au rouleau voisin de l'unité transporteuse précédente et à celuide l'unité transporteuse suivante dans la direction de transport (F), également par l'intermédiaire d'une transmission à courroie (7), les diamètres des poulies des transmissions à courroie individuelles étant chaque fois choisis tels que, vu dans la direction de transport, entre chaque fois deux rouleaux d'avancement, une augmentation de vitesse du rouleau d'aval se produise.

2. Dispositif suivant la revendication 1, caractérisé en ce que le rouleau d'avancement (4'') de la dernière unité transporteuse (3) dans la direction de transport, adjacent au dispositif transporteur de sortie (2), est en liaison d'entraînement avec le dispositif transporteur de sortie (2) qui est entraîné à une vitesse supérieure à celle du dispositif transporteur d'alimentation (1).

3. Dispositif suivant la revendication 1 ou 2, caractérisé en ce que les transmissions à courroie ont la forme de courroies dentées (5, 7).

4. Dispositif suivant l'une quelconque des revendications 1 à 3, caractérisé en ce que les rouleaux d'avancement (4', 4'') sont pourvus d'une garniture augmentant la friction.

## Claims

1. Apparatus for the individual separation of material in sheet form between two conveying devices arranged one behind the other, which devices are connected in particular to a folding means for printed products, the material being arranged in an imbricated formation on the conveying device on the feed side, having a plurality of conveying units arranged one behind the other in the conveying direction, characterized in that the conveying units (3) are each formed by two mutually parallel advancing rollers (4', 4'') of equal diameter, in that the advancing rollers (4', 4'') are in each case in drive connection at one end with each other via a belt drive (5), whereas they are in drive connection at their other end with what is respectively the neighbouring roller of the conveying unit upstream and downstream in the conveying direction (F), likewise via a belt drive (7), the diameters of the belt pulleys of the individual belt drives in each case being chosen large enough that, seen in the conveying direction, there takes place between each two rollers an increase in speed of the downstream advancing roller.

2. Apparatus according to Claim 1, characterized in that the advancing roller (4'') of the last conveying unit (3) in the conveying direction and facing the conveying device (2) on the delivery side is in drive connection with the conveying device (2) on the delivery side, which device is driven at greater speed than the conveying device (1) on the feed side.

3. Apparatus according to Claim 1 or 2, characterized in that the belt drives are designed as toothed-belt drives (5, 7).

4. Apparatus according to one of Claims 1 to 3, characterized in that the advancing rollers (4', 4'') are provided with a friction-enhancing coating.

F

4'' 4' 4''

Fig.1

1 2 3 5 6 7 8

EP 0 276 259 B1

7

F

2

1 5 3

Fig.2